(19) Europäisches Patentamt
European Patent Office
Office européen des brevets

(11) Veröffentlichungsnummer: **0 249 078 B1**

# (12) EUROPÄISCHE PATENTSCHRIFT

(45) Veröffentlichungstag der Patentschrift: **20.02.91**

(51) Int. Cl.[5]: **B01J 20/32**, C08F 220/54

(21) Anmeldenummer: **87107532.1**

(22) Anmeldetag: **23.05.87**

## (54) Optisch aktive Adsorbentien.

(30) Priorität: **07.06.86 DE 3619303**

(43) Veröffentlichungstag der Anmeldung: **16.12.87 Patentblatt 87/51**

(45) Bekanntmachung des Hinweises auf die Patenterteilung: **20.02.91 Patentblatt 91/08**

(84) Benannte Vertragsstaaten: **BE CH DE FR GB IT LI NL SE**

(56) Entgegenhaltungen:
**EP-A- 0 155 637**
**EP-A- 0 172 579**
**DE-A- 2 750 595**
**US-A- 3 808 125**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt(DE)**

(72) Erfinder: **Blaschke, Gottfried, Prof.Dr.**
**Vredenweg 18**
**D-4400 Münster(DE)**
Erfinder: **Fraenkel, Werner**
**Bachstrasse 14**
**D-4502 Bad Rothenfelde(DE)**
Erfinder: **Bröker, Werner**
**Hamburger Strasse**
**D-4400 Münster(DE)**
Erfinder: **Kinkel, Joachim, Dr.**
**Waldhilbersheimer Strasse 4**
**D-6531 Guldental(DE)**

**EP 0 249 078 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

1. Anwendungsgebiet

Die Erfindung betrifft Adsorbentien auf Basis optisch aktiver Poly(meth)acrylsäureamide, die zur Trennung von racemischen Gemischen in ihre optischen Antipoden verwendet werden können, bei denen diese Amide in an Kieselgel gebundener Form vorliegen.

Erhältlich sind solche Amide beispielsweise aus polymerisationsfähigen Verbindungen der Formel I

$$\begin{array}{l} CH_2 = CR^1\text{-}CO\text{-}NR^2 \\ \qquad\qquad\qquad\quad | \\ \qquad\qquad\qquad\quad X \end{array} \qquad\qquad I$$

worin

$R^1$ H oder Methyl,

$$\begin{array}{c} \text{-}NR^2 \\ | \\ X \end{array}$$

ein optisch aktives, sek. oder tert. Amin oder ein über den Stickstoff gebundener, optisch aktiver Aminsäureester mit bis zu 15 C-Atomen in der Hauptkette

und

$R^2$ H oder Methyl bedeuten.

Diese an Kieselgel gebundenen Polymerisate können als Adsorbentien zur Trennung von racemischen Gemischen insbesondere in der Chromatographie verwendet werden, bevorzugt in der Hochdruckchromatographie.

2. Stand der Technik

Die Trennung racemischer Gemische in optische Antipoden ist ein sehr wesentliches Problem der präparativen Chemie. Neben den klassischen Methoden durch Umwandlung des racemischen Gemisches in ein Gemisch von Diastereomeren und deren Trennung aufgrund unterschiedlicher physikalischer Eigenschaften hat man sich in den letzten Jahren hauptsächlich mit chromatographischen Methoden zur Trennung racemischer Gemische beschäftigt. Dabei werden vor allem optisch aktive Adsorbentien als stationäre Phase verwendet.

Das Problem besteht insbesondere darin, optisch aktive Adsorbentien zu finden, welche die Trennung einer Vielzahl chemisch unterschiedlicher Racemate ermöglichen und damit universell anwendbar sind.

Es ist z. B. bekannt, optisch aktive Acrylsäure- und Methacrylsäureamide in Gegenwart eines Vernetzers in Suspension zu polymerisieren, diese vernetzten Polyamide in entsprechenden Fließmitteln quellen zu lassen und zur Trennung von Enantiomeren einzusetzen (beschrieben in der DE-PS 25 00 523). Ein großer Nachteil besteht jedoch darin, daß diese Materialien nur für die Niederdruckflüssigkeitschromatograhie einsetzbar sind. Bei Drucken größer 5 bar werden diese vernetzten Polyamide komprimiert und für das Fließmittel undurchlässig, d. h. die Fließgeschwindigkeit nimmt stark ab. Ferner ist ihr Quellungsgrad von der Fließmittelzusammensetzung abhängig.

Hochdruckflüssigkeitschromatographie oder Gradientenelution ist an diesen Gelen nicht möglich.

3. Ziel der Erfindung

Aufgabe der vorliegenden Erfindung war es, Adsorbentien herzustellen und zur Verfügung zu stellen, welche die Trennung von racemischen Gemischen unterschiedlichster Struktur mit hohem Trenneffekt ermöglichen und universell auch für Hochdruckflüssigkeitschromatographie mit Gradientenelution verwendbar sind.

4. Beschreibung der Erfindung

Es wurde nun überraschenderweise gefunden, daß durch die Bindung der optisch aktiven Polyamide an einen Träger wie Kieselgel besonders vorteilhafte, optisch aktive Adsorbentien zur Racematspaltung erhalten werden, die hervorragend für Hochdruckflüssigkeitschromatographie und/oder Gradientenelution geeignet sind.

Gegenstand der Erfindung sind daher Adsorbentien auf Basis optisch aktiver Poly(meth)-acrylsäureamide, bei denen diese Amide an Kieselgel gebunden sind.

Gegenstand der Erfindung sind weiterhin Adsorbentien, bei denen die optisch aktiven Acrylsäureamide oder Methacrylsäureamide erhältlich sind aus polymerisationsfähigen Verbindungen der Formel I und wobei die optisch aktiven Polyamide direkt oder über (Meth)Acryloylgruppen am Kieselgel verankert sind.

Weiterhin ist Gegenstand der Erfindung ein Verfahren zur Herstellung von optisch aktiven Polymerisaten, dadurch gekennzeichnet, daß man ein hydrophiles Kieselgel, gegebenenfalls mindestens partiell modifiziert mit (Meth)Acrylsäure, mit optisch aktiven Monomeren der Formel I unter den Bedingungen einer Polymerisationsreaktion umsetzt.

Schließlich ist auch Gegenstand der Erfindung die Verwendung des erfindungsgemäßen, an Kieselgel gebundenen Polymerisats zur chromatographischen Trennung von racemischen Gemischen in die optischen Antipoden. Es können allgemein beliebige optisch aktive Acryl- oder Methacrylsäureamide als Monomere eingesetzt werden. Bevorzugt sind jedoch die Monomeren der Formel I.

Die bevorzugten Monomere der Formel I sind solche, in denen $R^1$ H oder Methyl bedeutet.

Die Gruppe

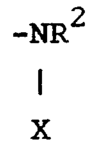

bedeutet vorzugsweise ein optisch aktives, Amidgruppe, die sich von einer Verbindindung $HNR^2X$ ableitet, beispielsweise von (S)-1-Phenylethylamin, (S)-Cyclohexylphenylmethylamin, (S)-1-Naphthylethylamin, (S)-1-Cyclohexylethylamin oder (1S,2R)-2-Phenylcyclopropylamin.

Ferner bedeutet die Gruppe

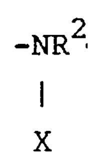

von $HNR^2X$ ab, das vorzugsweise einen optisch aktiven Aminosäureester mit bis zu 15 C-Atomen in der Hauptkette, d. h. ohne die Estergruppe darstellt. Bevorzugt sind Alkylester, insbesondere Ethylester, ferner auch Arylester. Besonders bevorzugt sind beispielsweise Alkylester des (S)-Phenylalanins, insbesondere der Ethylester, ferner auch beispielsweise die Ester von Leucin oder Valin.

$R^2$ bedeutet sowohl bei den Amin-, als auch bei den Aminosäurederivaten vorzugsweise H.

Es können beide Antipoden der optisch aktiven Verbindungen eingesetzt werden.

Die Monomeren der Formel I sind erhältlich beispielsweise durch Umsetzen von (S)-Phenylalaninethylester mit Acrylsäurechlorid oder von (S)-1-Cyclohexylethylamin mit Methacrylsäurechlorid oder allgemein durch Umsetzen der optisch aktiven Amine oder Aminosäureester

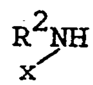

mit Methacrylsäure- oder Acrylsäurederivaten, vorzugsweise in Gegenwart eines Polymerisationsinhibitors wie 4-tert.-Butylbrenzcatechin bei Temperaturen zwischen etwa -5° und 60 °C. Vorteilhafterweise arbeitet man bei Raumtemperatur unter Verwendung eines inerten organischen Lösungsmittels, insbesondere eines Halogenkohlenwasserstoffs wie Methylenchlorid oder Chloroform. Die Reaktionszeiten liegen zwischen etwa 30 Minuten und 4 Stunden und hängen im wesentlichen von der Reaktionstemperatur ab. Die Reaktionsbedingungen sind in der Literatur vielfältig beschrieben.

Vorzugsweise sind die optisch aktiven Polyamide an hydrophile Kieselgele gebunden. Dabei sind mit Diol-, $NH_2$- oder Cyano-Gruppen modifizierte Kieselgele bevorzugt. Insbesondere sind die Diolgruppenhaltigen Kieselgele bevorzugt. Derartig modifizierte Kieselgele sind bekannt und im Handel erhältlich.

Zur Herstellung dieser an Kieselgel gebundenen Polyamide gibt es vorzugsweise zwei Varianten. Zunächst kann man ein mit z. B. Diolgruppen modifiziertes Kieselgel in bekannter Weise mit (Meth)-Acrylsäure verestern. Dabei arbeitet man vorzugsweise in einem inerten Lösungsmittel, vorzugsweise z. B. Dioxan oder Tetrahydrofuran, bei Temperaturen zwischen -20° und 80 °C, vorzugsweise bei Raumtemperatur. Die Veresterungsreaktionen sind in der Regel zwischen 15 Minuten bis 48 Stunden beendet. Bevorzugt eingesetzt wird ein reaktionsfähiges Derivat der (Meth)Acrylsäure, wie z. B. (Meth)-Acrylsäureanhydrid. Diese Modifizierung sollte mindestens partiell erfolgen. Vorteilhafterweise wird ein Veresterungsgrad von über 50 %, insbesondere von über 70 % angestrebt. Die Beladung des Kieselgels mit (Meth)Acrylsäureester-Gruppen beträgt 0,5-4,0 $\mu mol/m^2$, insbesondere 2,0-3,0 $\mu mol/m^2$.

Anschließend wird der an Kieselgel gebundene (Meth)Acrylsäureester in Suspension mit einem Monomeren der Formel I copolymerisiert. Die Polymerisation wird in an sich bekannter Weise in Gegenwart eines Radikalbildners, beispielsweise eines Peroxids wie Dibenzoylperoxid, Dilauroylperoxid, Di-o-tolylperoxid oder einer Azoverbindung wie Azoisobutyronitril durchgeführt. Die Reaktionskomponenten werden in einem inerten organischen Lösungsmittel, vorzugsweise einem aromatischen Kohlenwasserstoff wie Benzol oder Toluol, oder auch einem Kohlenwasserstoff wie Cyclohexan, oder einem Halogenkohlenwasserstoff wie Methylenchlorid, Chloroform oder 1,2-Dichlorethan, suspendiert. Das gerührte Gemisch wird unter einer Inertgas-Atmosphäre, vorzugsweise unter Stickstoff, auf Temperaturen zwischen +40° und +100 °C, vorzugsweise zwischen 70° und 90° erhitzt. Die Polymeri sationsdauer liegt zwischen etwa 10 und 60 Minuten, vorzugsweise zwischen 15 und 30 Minuten. Die Polymerisation wird durch Zugabe eines Inhibitors, wie z. B. tert.-Butylbrenzcatechin, abgebrochen. Das auf diese Weise erhaltene Polyamid, das kovalent an das Kieselgel gebunden ist, wird durch Filtration abgetrennt, gründlich gewaschen und im Vakuum getrocknet.

Genauso ist es möglich, anstelle von mit Diolgruppen modifiziertem Kieselgel ein mit Aminogruppen modifiziertes Kieselgel mit einem (Meth)acrylsäurederivat umzusetzen und mit monomeren (Meth)-acrylsäureamiden einer Copolymerisation zu unterwerfen. Dabei erhält man Materialien, die ebenfalls für die Enantiomerentrennung geeignet sind.

Eine andere Verfahrensvariante besteht darin, daß man direkt ein hydrophiles Kieselgel mit Monomeren der Formel I unter den üblichen Bedingungen einer Polymerisationsreaktion umsetzt. Dabei resultiert ebenfalls eine Verankerung der Polyamide am Kieselgel, und man erhält Materialien, die ebenfalls zur direkten Enantiomerentrennung mittels Hochdruckflüssigkeitschromatographie geeignet sind. Die Polymerisation wird dabei in der oben beschriebenen Weise durchgeführt.

Das Verhältnis von Kieselgel zu Monomer (in Gewichtsteilen) kann bei den beschriebenen Umsetzungen variiert werden zwischen 1:0,05 bis 1:10, vorzugsweise liegt es im Bereich von 1:0,1 bis 1:0,5, insbesondere bei 1:0,25.

Die Beladung des Kieselgels mit Poly(meth)acrylamiden kann daher im Bereich von 0,5-8,0 $\mu mol/m^2$, vorzugsweise zwischen 2,0-4,0 $\mu mol/m^2$ liegen.

Die erfindungsgemäßen Materialien ermöglichen die Trennung von racemischen Gemischen mit hohen optischen Ausbeuten mittels Hochdruckflüssigkeitschromatographie, was bei den Polymerisaten, die nicht am Kieselgel verankert sind, unmöglich ist. Die Arbeitmethodik der Hochdruckflüssigkeitschromatographie zur präparativen Trennung von racemischen Gemischen in ihre optischen Antipoden ist dem Fachmann vertraut. Üblicherweise wird das Adsorbens im Fließmittel suspendiert und unter Druck mit einem Füllgerät in Stahlsäulen gefüllt. Das zu trennende Racemat wird, gelöst in einem entsprechenden Fließmittel, auf die Säule gegeben. Schließlich wird mit Fließmitteln, gegebenenfalls mit Gradientenelution, mit einer bestimmten Fließgeschwindigkeit eluiert und detektiert.

Die Vorteile der Enantiomerentrennungen, die mittels Hochdruckflüssigkeitschromatographie unter Verwendung des erfindungsgemäßen Adsorbens durchgeführt werden, liegen im Vergleich zu Trennungen an nicht-verankerten Polymerisaten mittels Niederdruckflüssigkeitschromatographie in einer wesentlich kürzeren Trennzeit und einer höheren Trennleistung. Als Fließmittel verwendet man vorteilhafterweise Kohlenwasserstoffe, insbesondere aromatische Kohlenwasserstoffe und Ether oder Gemische dieser Lösungsmittel. Besonders geeignet sind Gemische aus Dioxan und Hexan. Mit Hilfe der erfindungsgemäßen Polymerisate lassen sich Trennungen von Racematen der unterschiedlichsten Verbindungsklassen durchführen.

Im folgenden werden Herstellungs- und Trennungsbeispiele die erfindungsgemäßen Polymerisate näher erläutern.

## 5. Beispiele

### Beispiel 1

a. Eine Suspension von 2,5 g Diolphase (Kieselgel LiChrosorb$^R$ Diol 5 $\mu$m, E. Merck) in 20 ml Dioxan wird im Stickstoffstrom mit einer Lösung von 1,5 g Methacrylsäureanhydrid in 10 ml sowie 0,8 g Diisopropylethylamin in 30 ml Dioxan versetzt, bei Raumtemperatur 30 Minuten gerührt, 24 Stunden stehengelassen, abgesaugt, mit Dioxan gewaschen und getrocknet. Man erhält so ein weißes Präparat (C = 8,27 %, H = 1,76 %).

b. Eine Suspension von 2,5 g des Kieselgel-gebundenen Methacrylsäureesters, hergestellt nach Beispiel 1a, in 10 ml Toluol wird unter Stickstoff mit einer Lösung von 7,5 g (S)-N-Acryloylphenylalaninethylester in 20 ml Toluol sowie einer Lösung von 22 mg Azo-bis-isobutyronitril in 10 ml Toluol versetzt und unter Rühren 15 Minuten bei 80 °C gehalten. Man bricht die Polymerisation durch Zugabe einer Lösung von 200 mg tert.-Butylbrenzcatechin in 10 ml Toluol ab, filtriert, wäscht und trocknet. Man erhält 3,0 g eines weißen Adsorbens (C = 21,35 %, H = 3,1 %, N = 1,16 %), das eine Beladung von etwa 20 Gewichtsprozent Polyacrylamid aufweist.

### Beispiel 2

Analog Beispiel 1b erhält man aus Kieselgel-gebundenem Methacrylsäureester (hergestellt nach Beispiel 1a) und (S)-N-(1-Phenylethyl)methacrylamid das entsprechende Kieselgel-gebundene Polymethacrylamid, wobei jedoch die Polymerisationsdauer 30 Minuten beträgt.

Auf gleiche Weise erhält man ausgehend von (S)-N-(1-Cyclohexylethyl)methacrylamid und Kieselgel-gebundenem Methacrylsäureester ein an Kieselgel gebundenes (S)-N-(1-Cyclohexylethyl)-polymethacrylamid.

### Beispiel 3

Man erhitzt eine Suspension von 2,5 g Kieselgel (LiChrosorb$^R$ Diol 5 $\mu$m, E. Merck) unter Rühren in einer Stickstoffatmosphäre in einer Lösung von 7,5 g (S)-N-Acryloylphenylalaninethylester und 22 mg Azo-bis-isobutyronitril in 40 ml Toluol 15 Minuten auf 80 °C, bricht die Reaktion ab, wäscht und trocknet. Man erhält 2,8 g eines weißen Adsorbens (C = 12,48 %, H = 2,06 %, N = 0,65 %).

### Beispiel 4

Man erhitzt eine Suspension von 5,0 g Kieselgel (LiChrosorb$^R$ Diol 5 $\mu$m, E. Merck) unter Rühren in einer Stickstoffatmosphäre in einer Lösung von 1,25 g (S)-Acryloylphenylalaninethylester und 44 mg Azo-bis-isobutyronitril in 100 ml Cyclohexan 15 Minuten auf 80 °C, bricht die Reaktion ab, wäscht und trocknet.

### Beispiel A

Die Adsorbentien werden als Suspension in 30 ml Isopropanol bei einem Durck von 450-500 bar in Stahlsäulen (250 × 4 mm) gefüllt.

Chromatographiert werden jeweils Lösungen von 3-15 $\mu$g eines Racemats in Dioxan mit einer Fließgeschwindigkeit von 0,5-2,0 ml, wobei sich je nach Fließmittel und -geschwindigkeit ein Druck von 20-100 bar einstellt. Detektiert wird mit einer Durchflußzelle bei 254 nm.

In der folgenden Tabelle sind die Ergebnisse der chromatographischen Trennungsversuche von verschiedenen Racematen wiedergegeben.

| Adsorbens | Racemat | Fließmittel n-Hexan/Dioxan | Fluß ml/min. | Elutionsvolumen der Enantiomeren (ml) | |
|---|---|---|---|---|---|
| A | Oxazepam | 75 : 25 | 1,0 | 51,8 | 55,8 |
| A | Oxazolam | 80 : 20 | 0,5 | 12,3/ 13,8 | 15,9/ 18,3 (Diast.) |
| A | Penflutizid | 53 : 47 | 1,5 | 41,4 | 46,8 |
| B | N-Desmethyl-chlormezanon | 65 : 35 | 1,0 | 35,4 | 43,8 |
| B | Cyclopenthiazid | 40 : 60 | 2,0 | 54,9 | 86,7 |
| C | Thalidomid | 75 : 25 | 1,0 | 17,1 | 23,4 |
| C | Acenocumarin | 75 : 25 | 1,0 | 34,2 | 39,0 |
| D | Lopirazepam | 50 : 50 | 1,0 | 40,8 | 49,2 |
| D | Chlormezanon | 75 : 25 | 1,0 | 19,8 | 23,4 |
| D | Chlortalidon | 55 : 45 | 0,7 | 30,2 | 36,1 |

Adsorbens A: hergestellt nach Beispiel 1b
Adsorbens B: hergestellt nach Beispiel 2
Adsorbens C: Kieselgel-gebundenes Cyclohexylethyl-polymethacrylamid, herstellbar analog Beispiel 2
Adsorbens D: hergestellt nach Beispiel 3

Aus diesen Ergebnisse ist deutlich zu sehen, daß die erfindungsgemäßen Materialien hervorragend zur Enantiomerentrennung mittels Hochdruckflüssigkeitschromatographie geeignet sind. Die Elutionsvolumina der Enantiomeren liegen genügend weit auseinander, und man erhält überwiegend eine sehr gute Basislinientrennung.

## Ansprüche

1. Adsorbens auf Basis polymerisierter optisch aktiver (Meth)Acrylsäureamide, erhältlich aus polymerisationsfähigen Verbindungen der Formel I

$$CH_2 = CR^1\text{-}CO\text{-}NR^2\text{-}X \qquad \text{I}$$

(X bonded below N)

worin

- $R^1$ H oder Methyl ist und
- $-NR^2X$ einen Rest darstellt, der sich von einer Substanz $HNR^2x$ ableitet, die ein optisch aktives Amin oder einen optisch aktiven Aminosäureester mit bis zu 15 C-Atomen in der Hauptkette darstellt und die durch Reaktion mit einem (Meth)Acrylsäurederivat über r den Stickstoff an die -CO-Gruppe in Formel I gebunden wird, wobei das optisch aktive C-Atom in X enthalten ist und
- $R^2$ H oder Methyl bedeutet,

und wobei die optisch aktiven Poly(meth)acrylsäureamide direkt oder über (Meth)-Acryloylgruppen am Kieselgel verankert sind.

2. Verfahren zur Herstellung eines Adsorbens nach Anspruch 1, dadurch gekennzeichnet, daß Kieselgel oder ein hydrophil modifiziertes Kieselgel, gegebenenfalls nach einer mindestens partiellen Veresterung mit (Meth)Acrylsäure, unter den Bedingungen einer Polymerisationsreaktion mit optisch aktiven Monomeren der Formel I umgesetzt wird.

3. Verfahren nach Anspruch 2, dadurch gekennzeichnet, daß als hydrophil modifiziertes Kieselgel ein Diolgruppenhaltiges Kieselgel verwendet wird.

4. Verwendung eines Adsorbens nach Anspruch 1, zur chromatographischen Trennung von racemischen Gemischen in die optischen Antipoden.

## Claims

1. Adsorbent based on polymerized optically active (meth)acrylamides obtainable from polymerizable compounds of the formula I

$$CH_2 = CR^1-CO-\underset{\displaystyle X}{\underset{|}{N}}R^2 \qquad \text{I}$$

in which

- $R^1$ is H or methyl,
- $-NR^2X$ represents a radical derived from a substance $HNR^2X$ which represents an optically active amine or an optically active amino acid ester having up to 15 C atoms in the main chain and which is bonded to the -CO- group in formula I via the nitrogen by reaction with a (meth)acrylic acid derivative, the optically active C atom being included in X, and
- $R^2$ is H or methyl,

and wherein the optically active poly(meth)acrylamides are attached to the silica gel directly or via (meth)acryloyl groups.

2. Process for preparing an adsorbent according to Claim 1, characterized in that silica gel or a hydrophilically modified silica gel, if desired after an at least partial esterification with (meth)acrylic acid, is reacted with optically active monomers of the formula I under the conditions of a polymerization reaction.

3. Process according to Claim 2, characterized in that the hydrophilically modified silica gel used is a silica gel containing diol groups.

4. Use of an adsorbent according to Claim 1, for chromatographic separation of racemic mixtures into the optical antipodes.

## Revendications

1. Adsorbant à base d'amides d'acide (méth)acrylique optiquement actif polymérisé, que l'on peut obtenir

à partir de composés polymérisables de formule I

$$CH_2 = CR^1-CO-\underset{\displaystyle X}{\underset{|}{NR^2}}$$

où

- $R^1$ représente H ou un méthyle, et
- $-NR^2X$ représente un radical qui dérive d'une substance $HNR^2X$, qui représente une amine optiquement active ou un ester d'acide aminé optiquement actif ayant jusqu'à 15 atomes de carbone dans la chaîne principale, et qui est lié par réaction avec un dérivé d'acide (méth)acrylique par l'intermédiaire de l'azote au groupe -CO dans la formule I, ou l'atome de carbone optiquement actif est contenu dans X et
- $R^2$ représente H ou un méthyle,

et où les amides d'acide poly(méth)acrylique optiquement actifs sont ancrés directement, ou par l'intermédiaire de groupes (méth)acryloyle au gel de silice.

**2.** Procédé de préparation d'un adsorbant selon la revendication 1, caractérisé en ce qu'on fait réagir le gel de silice ou un gel de silice modifié de façon hydrophile, éventuellement après une estérification au moins partielle avec de l'acide (méth)acrylique dans les conditions d'une réaction de polymérisation avec des monomères optiquement actifs de formule I.

**3.** Procédé selon la revendication 2, caractérisé en ce qu'on utilise comme gel de silice modifié hydrophile un gel de silice contenant des groupes diol.

**4.** Application d'un adsorbant selon la revendication 1 à la séparation chromatographique de mélanges racémiques en les antipodes optiques;